(19) Europäisches Patentamt
European Patent Office
Office européen des brevets

(11) Veröffentlichungsnummer: **0 069 287**
**B1**

(12) # EUROPÄISCHE PATENTSCHRIFT

(45) Veröffentlichungstag der Patentschrift: **05.11.86**

(51) Int. Cl.⁴: **C 08 G 18/14,** C 08 G 18/48

(21) Anmeldenummer: **82105594.4**

(22) Anmeldetag: **25.06.82**

(54) **Verfahren zur Herstellung von gegebenenfalls zellhaltigen Polyurethan-Elastomeren.**

(30) Priorität: **04.07.81 DE 3126517**

(43) Veröffentlichungstag der Anmeldung:
**12.01.83 Patentblatt 83/2**

(45) Bekanntmachung des Hinweises auf die Patenterteilung:
**05.11.86 Patentblatt 86/45**

(84) Benannte Vertragsstaaten:
**AT BE CH DE FR GB IT LI NL SE**

(56) Entgegenhaltungen:
**EP-A-0 047 371**
**BE-A-813 052**
**DE-A-1 570 885**
**FR-A-2 357 592**
**US-A-4 243 760**

(73) Patentinhaber: **BASF Aktiengesellschaft, Carl-Bosch- Strasse 38, D-6700 Ludwigshafen (DE)**

(72) Erfinder: **Nissen, Dietmar, Dr., Ziegelhaeuser Landstrasse 31, D-6900 Heidelberg (DE)**
Erfinder: **Straehle, Wolfgang, Dr., Hirschgasse 20, D-6900 Heidelberg (DE)**
Erfinder: **Marx, Matthias, Dr., Seebacher Strasse 49, D-6702 Bad Duerkheim (DE)**

**EP 0 069 287 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Zur Herstellung von zellhaltigen Polyurethan-Elastomeren, wie z.B. Polyurethan-Weichintegralschaumstoffen, werden als Polyether-polyole vielfach sogenannte aktivierte, hochmolekulare Blockcopolyether-polyole mit endständigen Oxyethylengruppen verwendet, die überwiegend, d.h. bis zu maximal 85 % primäre Hydroxylgruppen besitzen. Auf dieser Grundlage können nach entsprechenden Rezepturen Gebrauchsartikel, wie z.B. Schuhsohlen, Armstützen, Lenkradumschäumungen u.a. mit guten mechanischen Eigenschaften erhalten werden. Die bekannten Verfahren weisen jedoch auch gewisse Nachteile auf. Nachteilig ist beispielsweise die relativ lange Zykluszeit bei der Produktion solcher Gebrauchsartikel. Wünschenswert wäre ferner, wenn die Reißfestigkeit und Härte, insbesondere bei Schuhsohlenmaterialien, verbessert werden könnte.

Diese Nachteile sollten durch die vorliegende Erfindung beseitigt oder wenigstens vermindert werden.

Die Herstellung von Polyurethan-Elastomeren unter Verwendung von Blockpolyether-polyolen als Aufbaukomponente mit Hilfe der Reaktionsspritzgußtechnik wird in der US-A- 4 243 760 beschrieben. Als geeignete Polyether-polyole genannt werden Polyether-triole, die ein inneres Polyoxyalkylensegment aus 2 bis 35 Gew.-% polymerisierten Ethylenoxid- und 65 bis 98 Gew.-% polymerisierten Propylenoxidgruppen besitzen und eine solche Menge endständiger polymerisierter Ethylenoxidgruppen aufweisen, daß der Gehalt an primären Hydroxylgruppen größer als 50 %, vorzugsweise größer als 90 %,ist. Die Patentschrift enthält jedoch keine Angaben über den Gesamtgehalt an Ethylenoxid im Polyether-triol und insbesondere über den endständigen Ethylenoxidgehalt, der zur Erzielung eines Gehalts an primären Hydroxylgruppen von mindestens 50 % erforderlich ist.

Nach Angaben der FR-A- 2 357 592 können Polyether-polyole und lagerstabile, durch in situ Polymerisation hergestellte Polymer-polyether-polyol-Dispersionen, die gut mit Kettenverlängerungsmitteln mischbar sind, zur Herstellung von Polyurethan-Elastomeren mit zufriedenstellenden mechanischen Eigenschaften, Hydrolysebeständigkeit und in manchen Fällen sehr guter Entformbarkeit verwendet werden. Die Patentschrift verweist zwar auf die Vor- und Nachteile eines hohen Ethylenoxidgehalts, vermittelt jedoch keine Lehre zur Herstellung von Polyether-polyolen mit einem hohen Gehalt an primären Hydroxylgruppen und einem möglichst geringen Gehalt an endständigen Polyoxyethyleneinheiten.

Gegenstand der Erfindung ist somit ein Verfahren zur Herstellung von gegebenenfalls zellhaltigen Polyurethan-Elastomeren durch Umsetzung von organischen Polyisocyanaten, Blockpolyether-polyolen, Kettenverlängerungsmitteln und/oder Vernetzungsmitteln in Gegenwart von Katalysatoren sowie gegebenenfalls Treibmitteln, Hilfs— und Zusatzstoffen, das dadurch gekennzeichnet ist, daß man als Blockpolyether-polyole Polyoxyalkylen-Polyoxyethylen-polyole mit endständigen Oxyethylengruppen verwendet, die einen Ethoxilierungsgrad von 1 bis 13 und einen Gehalt an primären Hydroxylgruppen beim entsprechenden Ethoxilierungsgrad vom Werte der Kurve A bis 100 %, bezogen auf die Gesamtmenge an Hydroxylgruppen, besitzen, wobei die Kurve A die Abhängigkeit des Gehalts an primären Hydroxylgruppen von Ethoxilierungsgrad wie folgt beschreibt:

| Ethoxilierungs-grad | Gehalt an premiären Hydroxylgruppen (bezogen auf die Gesamtmenge an Hydroxylgruppen) (%) |
|---|---|
| 1 | 46,8 - 100 |
| 1,5 | 54,3 - 100 |
| 2 | 59,7 - 100 |
| 2,5 | 63,9 - 100 |
| 3 | 67,3 - 100 |
| 3,5 | 70,2 - 100 |
| 4 | 72,7 - 100 |
| 4,5 | 74,9 - 100 |
| 5 | 76,8 - 100 |
| 5,5 | 78,8 - 100 |
| 6 | 80,2 - 100 |
| 7 | 83,1 - 100 |
| 8 | 85,6 - 100 |
| 9 | 87,8 - 100 |
| 10 | 89,8 - 100 |
| 11 | 91,0 - 100 |
| 12 | 92,0 - 100 |
| 13 | 93,0 - 100 |

Überraschenderweise zeigte sich, daß nach dem erfindungsgemäßen Verfahren bei der Produktion von Formkörpern die Entformzeit und somit die Formstandzeit und Zykluszeit verkürzt werden können. Besonders hervorzuheben ist auch die Erhöhung der Reißfestigkeit und der Härte. So gelang es bei Schuhsohlenmaterialien aus Polyurethan-Elastomeren auf Basis der erfindungsgemäß verwendbaren Polyoxyalkylen-polyoxyethylen-polyole die Reißfestigkeit mehr den Werten für Polyester-Polyurethane anzugleichen. Ferner könnte die Härte der Produkte erhöht werden, ohne daß dafür die Hartsegmentkonzentration im Polyurethan-Elastomeren, d.h. der Anteil an Polyisocyanat und Kettenverlängerungsmittel in der Polyurethanformulierung, erhöht wird.

Zur Herstellung der gegebenenfalls zellhaltigen Polyurethan-Elastomeren eignen sich die an sich bekannten organischen Polyisocyanate, wie z.B. aliphatische, cycloaliphatische, araliphatische und vorzugsweise aromatische mehrwertige Isocyanate.

Im einzelnen seien beispielhaft genannt: Alkylendiisocyanate mit 4 bis 12 Kohlenstoffatomen im Alkylenrest, wie 1,12-Dodecandiisocyanat, Tetramethylen-diisocyanat-1,4 und vorzugsweise Hexamethylen-diisocyanat-1,6; cycloaliphatische Diisocyanate, wie Cyclohexan-1,3- und -1,4-diiso-cyanat sowie beliebige Gemische dieser Isomeren, 1-Iso-cyanato-3,3,5-trimethyl-5-isocyanatomethyl-cyclohexan (Isophoron-diisocyanat), 2,4- und 2,6-Hexahydrotoluylen-diisocyanat sowie entsprechende Isomerengemische, 4,4'-, 2,2'- und 2,4'-Dicyclohexylmethan-diisocyanat sowie die entsprechenden Isomerengemische und vorzugsweise aromatische Di- und Polyisocyante, wie 4,4'-, 2,4'- und 2,2'-Diisocyanato-diphenylmethan und die entsprechenden Isomerengemische, 2,4- und 2,6-Diisocyanato-toluol und die entsprechenden Isomerengemische, 1,5-Diisocyanato-naphthalin, Polyphenyl-polymethylen-polyisocyanate, 2,4,6-Tri-isocyanato-toluol und vorzugsweise Gemische aus Diisocyanato-diphenylmethan und Polyphenyl-polymethylen-polyisocyanaten (Roh-MDI). Die genannten Di- und Polyisocyanate können einzeln oder in Form von Mischungen eingesetzt werden.

Häufig werden auch sogenannte modifizierte mehrwertige Isocyanate, d.h. Produkte die durch chemische Umsetzung obiger Di- und/oder Polyisocyanate erhalten werden, verwendet. Als modifizierte organische Di- und Polyisocyanate kommen beispielsweise in Betracht: Carbodiimidgruppen aufweisende Polyisocyanate gemäß DE-PS 10 92 007, Allophanatgruppen aufweisende Polyisocyanate, wie sie z.B. in der britischen Patentschrift 994 890, den ausgelegten Unterlagen des belgischen Patents 761 626 und der NL-OS-71 02 524 beschrieben werden, Isocyanuratgruppen aufweisende Polyisocyanate wie sie z.B. in den DE-PS 10 22 789, 12 22 067 und 10 27 394 sowie den DE-OS 19 29 034 und 20 04 048 beschrieben werden, Urethangruppen aufweisende Polyisocyanate, wie sie z.B. in den ausgelegten Unterlagen des belgischen Patents 752 261 oder der US-PS 33 94 164 beschrieben werden, acylierte Harnstoffgruppen aufweisende Polyisocyanate z.B. gemäß DE-PS 12 30 778, Biuretgruppen aufweisende Polyisocyanate z.B. gemäß DE-PS 11 01 394 und GB-PS 889 050; durch Telomerisationsreaktionen hergestellte Polyisocyanate z.B. entsprechend den ausgelegten Unterlagen des belgischen Patents 723 640, Estergruppen aufweisende Polyisocyanate, wie sie z.B. in der GB-PS 965 474 und 10 72 956, der US-PS 35 67 765 und der DE-PS 12 31 688 genannt werden.

Vorzugsweise kommen jedoch zur Anwendung: urethangruppenhaltige Polyisocyanate, beispielsweise mit niedermolekularen Diolen, Triolen oder Polypropylenglykolen, modifiziertes 4,4'-Diphenylmethan-diisocyanat oder Toluylen-diisocyanat, Carbodiimidgruppen und/oder Isocyanuratringe enthaltende Polyisocyanate, z.B. auf Diphenylmethan-diisocyanat und/oder Toluylendiisocyanat-Basis und insbesondere Toluylendiisocyanate, Diphenylmethan-diisocyanate, Mischungen aus Diphenylmethan-diisocyanaten und Polyphenyl-polymethylen-polyisocyanaten (Roh-MDI) und Gemische aus Toluylendiisocyanaten und Roh-MDI.

Wesentliches Merkmal der vorliegenden Erfindung ist die Verwendung von hochaktivierten Polyoxyalkylen-Polyoxyethylen-polyolen mit endständigen Oxyethylengruppen als Blockpolyether-polyole. Geeignet sind Polyoxyalkylen-Polyoxyethylen-polyole mit Ethoxilierungsgraden von 1 bis 13, vorzugsweise 2 bis 8, und einem Gehalt an primären Hydroxylgruppen beim entsprechenden Ethoxilierungsgrad vom Werte der Kurve A, vorzugsweise vom Werte der Kurve B gemäß der Abbildung bis 100 %, wobei die Kurven A und B die Abhängigkeit des Gehalts an primären Hydroxylgruppen vom Ethoxilierungsgrad beschreiben. Der Ethoxilierungsgrad wird hierbei definiert als der Quotient aus der Molzahl der endständigen Oxyethyleneinheiten und der Funktionalität der Polyoxyalkylen-polyoxyethylen-polyole. Im einzelnen besitzen die erfindungsgemäß verwendbaren Polyoxyalkylen-polyoxyethylen-polyole in Abhängigkeit vom Ethoxilierungsgrad folgenden Gehalt an primären Hydroxylgruppen (bezogen auf die Gesamtmenge an Hydroxylgruppen);

**Tabelle**

| Ethoxilierungsgrad | Gerhalt an primären Hydroxylgruppen [%] A | B (Vorzugsbereich) |
|---|---|---|
| 1 | 46,8—100 | 52 —100 |
| 1,5 | 54,3—100 | 59,5—100 |
| 2 | 59,7—100 | 65,0—100 |
| 2,5 | 63,9—100 | 69,0—100 |
| 3 | 67,3—100 | 72,5—100 |
| 3,5 | 70,2—100 | 75,5—100 |
| 4 | 72,7—100 | 78 —100 |
| 4,5 | 74,9—100 | 80 —100 |
| 5 | 76,8—100 | 82 —100 |
| 5,5 | 78,8—100 | 84 —100 |
| 6 | 80,2—100 | 85,5—100 |
| 7 | 83,1—100 | 88,2—100 |
| 8 | 85,6—100 | 90,7—100 |
| 9 | 87,8—100 | 93 —100 |
| 10 | 89,8—100 | 95 —100 |
| 11 | 91,0—100 | 96 —100 |
| 12 | 92,0—100 | 97 —100 |
| 13 | 93,0—100 | 98 —100 |

Die in der Tabelle angegebenen Grenzwerte von A und B liegen auf den Kurven A und B.

Die Herstellung der erfindungsgemäß verwendbaren Polyoxyalkylen-Polyoxyethylen-polyole, die in der EP-OS 47371 beschrieben ist, erfolgt in mehreren Stufen.

In der ersten Stufe werden gegebenenfalls substituierte Alkylenoxide oder Mischungen aus gegebenenfalls substituierten Alkylenoxiden und Ethylenoxid in Gegenwart von zu Beginn der Reaktion 0,01 bis 0,25 Molen, vorzugsweise 0,10 bis 0,25 Molenbasischem Katalysator pro Äquivalent zerewitinoffaktivem Wasserstoffatom des Startermoleküls polymerisiert. Mit fortschreitender Polymerisation und damit verbundener Erhöhung des Molekulargewichts der Polymerisate verbessert sich die Mischbarkeit der Alkylenoxide mit dem Reaktionsmedium. In dieser zweiten Reaktionsstufe, die nach einem Umsatz von ungefähr 20 % der zugeführten gegebenenfalls substituierten Alkylenoxide, gegebenenfalls im Gemisch mit Ethylenoxid, beginnt, kann die Katalysatormenge stufenweise oder in einem Schritt erhöht werden, so daß 0,10 bis 1,0 Mole,vorzugsweise 0,12 bis 0,3 Mole basischer Katalysator pro Äquivalent zerewitinoffaktivem Wasserstoffatom des Startermoleküls im Reaktionsgemisch vorliegen. Hierbei hat es sich als vorteilhaft erwiesen, pro Äquivalent zerewitinoffaktivem Wasserstoffatom des Startermoleküls für den Hydroxylzahlbereich gleich oder größer als 25 0,1 bis 1 Mole und für den Hydroxylzahlbereich kleiner als 25 0,12 bis 1,0 Mole basischen Katalysator einzusetzen. Erfolgt die Erhöhung der Katalysatormenge stufenweise, so wird nach jeder Katalysatorzugabe weiter polymerisiert, solange bis ein Umsatz von 100 % erreicht ist. Es ist jedoch auch möglich bis zu einem 100-prozentigen Umsatz zu polymerisieren und dann die Katalysatormenge in einem Schritt zu erhöhen.

Sofern eine Erhöhung der primären Hydroxylgruppen um weniger als ungefähr 12 % gewünscht wird, hat es sich als vorteilhaft erwiesen, die Katalysatorkonzentration mit fortschreitender Polymerisation nicht zu erhöhen, sondern bereits zu Beginn der Polymerisation 0,10 bis 0,25 Mole, insbesondere 0,12 bis 0,18 Mole basischen Katalysator pro Äquivalent zerewitinoffaktivem Wasserstoffatom des Startermoleküles, einzusetzen.

Das erhaltene rohe Polyetherol wird in einer 3. Stufe in Gegenwart der zugeführten Katalysatormenge von 0,10 bis 1,0 Molen basischem Katalysator pro reaktivem Wasserstoffatom mit maximal 30 Gewichtsprozent, vorzugsweise 5 bis 20 Gewichtsprozent und insbesondere 10 bis 18 Gewichtsprozent Ethylenoxid, bezogen auf das Gewicht des rohen Polyetherols, nachpolymerisiert. 8,8 bis 30 Gew.-% Ethylenoxid ergeben je nach Äquivalentgewicht des Polyetherols z.B. beim Äquivalentgewicht von 500 Ethoxilierungsgrade von 1 bis 3,5. 4,4 bis 30 Gew.-% Ethylenoxid ergeben beim Äquivalentgewicht 1000 einen Ethoxilierungsgrad von 1 bis 6,8 und 2,2 bis 30 Gew.-% Ethylenoxid beim Äquivalentgewicht 2000 einen solchen von 1 bis 13,6.

Im einzelnen werden die Polyoxyalkylen-Polyoxyethylen-polyole vorteilhafterweise wie folgt hergestellt:

Die hydroxylgruppenhaltigen Startermoleküle - werden aminogruppenhaltige Verbindungen verwendet, so wird zunächst an jedes Äquivalent reaktiven Wasserstoff katalysatorfrei mindestens ein Mol Alkylenoxid addiert und das erhaltene Additionsprodukt als Startermolekül eingesetzt - werden mit 0,01 bis 0,25 Molen mindestens eines basischen Katalysators pro Äquivalent Hydroxylgruppe partiell in die entsprechenden

Alkoholate übergeführt. Je nach verwendetem Katalysator wird danach gegebenenfalls gebildetes Wasser oder niedrig siedender Alkohol, zweckmäßigerweise unter vermindertem Druck, abdestilliert und bei Temperaturen von 50° bis 150°C, vorzugsweise 80°C bis 130°C, die gegebenenfalls mit einem unter den Reaktionsbedingungen inerten Gas, beispielsweise Stickstoff, verdünnten gegebenenfalls substituierten Alkylenoxide oder Mischungen aus gegebenenfalls substituierten Alkylenoxiden und Ethylenoxid im Gewichtsverhältnis von 100: 0 bis 60: 40, vorzugsweise von 99,5: 0,5 bis 80: 20 in dem Maße wie sie abreagieren, beispielsweise in 4 bis 30 Stunden, vorzugsweise 6 bis 10 Stunden bei Atmosphärendruck oder gegebenenfalls unter erhöhtem Druck bei 1,1 bis 20 bar, vorzugsweise 1,1 bis 7 bar in das Reaktionsmedium eingetragen.

Nach einem Umsatz von ungefähr 20 % kann die Polymerisation gegebenenfalls zur Erhöhung der Katalysatorkonzentration unterbrochen werden. Da hierzu jedoch zunächst die nicht umgesetzten gegebenenfalls Ethylenoxid haltigen gegebenenfalls substituierten Alkylenoxide vorzugsweise unter vermindertem Druck abgetrennt werden und nach der Katalysatorzugabe gebildetes Wasser oder niedrigsiedender Alkohol abdestilliert werden muß bevor die Polymerisation fortgesetzt werden kann und sich dieser Vorgang bei der stufenweisen Erhöhung der Katalysatormenge mehrfach, beispielsweise 2 bis 10fach wiederholen kann, hat es sich aus ökonomischen Gründen als vorteilhaft erwiesen, so daß diese Verfahrensweise bevorzugt angewandt wird, die Polymerisation zu Ende zu führen, d.h. bis zu einem Umsatz von ungefähr 100 % zu polymerisieren bevor die Katalysatorkonzentration erhöht wird.

Nach dieser Verfahrensvariante wird nach Beendigung der Polymerisation ebenfalls das überschüssige gegebenenfalls Ethylenoxid haltige gegebenenfalls substituierte Alkylenoxid bei Temperaturen von 100°C bis 150°C unter vermindertem Druck abdestilliert, in einem Schritt die Katalysatormenge erhöht, das erhaltene rohe Polyetherol partiell oder vollständig in das Alkoholat übergeführt und unter den obengenannten Reaktionsbedingungen mit maximal 30 Gewichtsprozent Ethylenoxid, bezogen auf das Polyetherolgemisch, nachpolymerisiert.

Die erfindungsgemäß hergestellten alkalihaltigen Polyoxyalkylen-polyoxyethylen-polyole werden nach Abdestillation des überschüssigen Ethylenoxids mit anorganischen Säuren, wie z.B. Schwefelsäure, Salzsäure oder Phosphorsäure, sauer reagierenden Salzen, wie z.B. Kaliumhydrogenphosphat, organischen Säuren, wie z.B. Zitronensäure, Tartronsäure u.a. oder Ionenaustauschern neutralisiert und nach bekannten Methoden gereinigt.

Geeignete gegebenenfalls substituierte Alkylenoxide mit 2 bis 4 Kohlenstoffatomen in der Alkylenkette und Molekulargewichten von 44 bis 120, vorzugsweise 44 bis 72 sind beispielsweise 1,2- und 2,3-Butylenoxid, gegebenenfalls an der Phenylgruppe substituierte Styroloxide, Cyclohexenoxid, und vorzugsweise 1,2-Propylenoxid. Zu der genannten Verbindungsklasse gehört auch Ethylenoxid, das jedoch in der Beschreibung stets separat davon genannt wird. Zur Herstellung der rohen, zur Nachpolymerisation verwendbaren Polyetherole können die gegebenenfalls substituierten Alkylenoxide einzeln, alternierend nacheinander, als Mischungen oder als Ethylenoxid haltige Mischungen eingesetzt werden.

Als Startermoleküle kommen di- bis octafunktionelle Polyamine und Polyole und vorzugsweise di- bis trifunktionelle Polyole in Betracht. Im einzelnen seien beispielhaft genannt:

Ammoniak, Hydrazin, aliphatische und aromatische, gegebenenfalls N-mono- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexa-methylendiamin, Phenylendiamine, 2,3-, 2,4- und 2,6-Toluylendiamin und 4,4'-, 2,4'- und 2,2'-Diaminodiphenyl-methane; Alkanolamine, wie Ethanolamin, Diethanolamin, N-Methyl- und N-Ethyl-diethanolamin, N-Methyl- und N-Ethyl-diethanolamin und Triethanolamin und Wasser. Vorzugsweise verwendet werden mehrwertige, insbesondere zwei- und/oder dreiwertige Alkohole, wie Ethylenglykol, 1,2- und 1,3-Propylenglykol, Diethylenglykol, Dipropylenglykol, 1,4-Butylenglykol, 1,6-Hexamethylenglykol, Glycerin, Trimethylol-propan, Pentaerythrit, Sorbit und Saccharose.

Gebräuchliche Katalysatoren sind Alkalialkoxide mit 1 bis 4 Kohlenstoffatomen im Alkylrest, wie Natriummethylat, Natrium- und Kaliumethylat, Kaliumisopropylat und Natriumbutylat, Erdalkalihydroxide, wie z.B. Calciumhydroxid und vorzugsweise Alkalihydroxide, wie Lithium- und insbesondere Natrium- und Kaliumhydroxid.

Die erfindungsgemäß verwendbaren Polyoxyalkylen-Polyoxyethylen-polyole sind di- bis octafunktionell, vorzugsweise di- bis tetrafunktionell und besitzen Hydroxylzahlen von 10 bis 500, vorzugsweise 10 bis 112 und insbesondere von 20 bis 75. Die Produkte sind bei der Umsetzung mit organischen Polyisocyanaten und ihren urethan-, carbodiimid-, isocyanurat- oder harnstoffmodifizierten Derivaten außerordentlich reaktiv. Produkte mit einem geringen Gehalt an Oxyethyleneinheiten zeichnen sich außerdem durch eine verbesserte Mischbarkeit mit aromatischen Polyisocyanaten aus.

Als Kettenverlängerungsmittel und/oder Vernetzungsmittel verwendet werden vorzugsweise niedermolekulare di- bis tetrafunktionelle Verbindungen aus der Gruppe der aliphatischen und/oder araliphatischen Diole und/oder Triole, der sekundären aromatischen Diamine und der primären aromatischen Diamine, wie z.B. der m-Phenylendiamine oder der 3,3',5,5'-tetra-alkylsubstituierten 4,4'-Diamino-diphenylmethane.

Geeignete Diole und Triole besitzen vorteilhafterweise Molekulargewichte kleiner als 400, vorzugsweise 60 bis 300. In Betracht kommen beispielsweise aliphatische und/oder araliphatische Diole mit 2 bis 14, vorzugsweise 4 bis 10 Kohlenstoffatomen, wie Ethylenglykol, Propandiol-1,3,Decandiol-1,10, Diethylenglykol, Dipropylenglykol und vorzugsweise Butandiol-1,4, Hexandiol-1,6 und Bis-(2-hydroxyethyl)-hydrochinon, Triole,

wie Glycerin und Trimethylolpropan und niedermolekulare hydroxylgruppenhaltige Polyalkylenoxide auf Basis Ethylen- und/oder Propylenoxid und den vorgenannten Startermolekülen.

Als sek. aromatische Diamine seien beispielhaft genannt: N.N'-dialkylsubstituierte aromatische Diamine, die gegebenenfalls am aromatischen Kern durch Alkylreste substituiert sein können, mit 1 bis 20, vorzugsweise 1 bis 4 Kohlenstoffatomen im N-Alkylrest, wie N,N'-Diethyl-, N,N'-Di-sek-pentyl-, N,N'-Di-sek-hexyl-, N,N'-Di-sek-decyl-, N,N'-Dicyclohexyl-p-bzw. m-Phenylendiamin, N,N'-Dimethyl-, N,N'-Diethyl-, N,N'-Diisopropyl-, N,N'-Di-sek-butyl-, N,N'-Dicyclohexyl-4,4'-diamino-diphenylmethan und N,N'-Di-sek-butyl-benzidin.

Als aromatische Diamine werden zweckmäßigerweise solche verwendet, die in ortho-Stellung zu den Aminogruppen mindestens einen Alkylsubstituenten besitzen, bei Raumtemperatur flüssig und mit den Polyoxyalkylen-Polyoxyethylen-polyolen mischbar sind. Bewährt haben sich ferner alkylsubstituierte meta-Phenylendiamine der Formeln

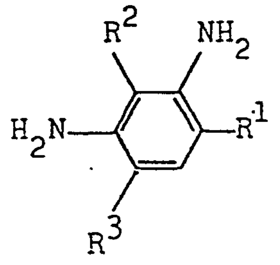

und/oder

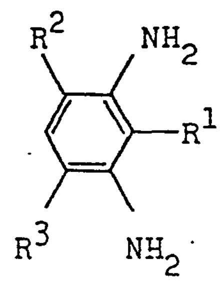

in denen $R^3$ und $R^2$ gleich oder verschieden sind und einen Methyl-, Ethyl-, Propyl- und Isopropylrest bedeuten und $R^1$ ein Alkylrest mit 4 bis 10, vorzugsweise 4 bis 6 Kohlenstoffatomen ist. Insbesondere bewährt haben sich Alkylreste $R^1$ mit einer Verzweigungsstelle am $C^1$-Kohlenstoff-atom. Als Reste $R^1$ seien beispielhaft genannt der 1-Methyl-octyl-, 2-Ethyl-octyl-, 1-Methyl-hexyl-, 1,1-Dimethyl-pentyl-, 1,3,3-Trimethyl-hexyl-, 1-Ethyl-pentyl-, 2-Ethyl-pentyl- und vorzugsweise der Cyclohexyl-, 1-Methyl-n-propyl-, tert.-Butyl-, 1-Ethyl-n-propyl-, 1-Methyl-n-butyl- und 1,1-Dimethyl-n-propylrest.

Als alkylsubstituierte m-Phenylendiamine kommen beispielsweise in Betracht: 2 4-Diethyl-8-methyl-, 2-Methyl-4,6-diethyl-, 2,4-Dimethyl-6-cyclohexyl-, 2-Cyclohexyl-4,6-diethyl-, 2-Cyclohexyl-2,6-isopropyl-, 2,4-Dimethyl-6-(1-ethyl-n-propyl)-, 2,4-Dimethyl-6-(1,1-dimethyl-n-propyl)-, 2-(1-Methyl-n-butyl)-4,6-dimethylphenylendiamin-1,3. Vorzugsweise verwendet werden 2,4-Di-methyl-6-tert.butyl-, 2,4-Dimethyl-6-isooctyl- und 2,4-Di-methyl-6-cyclohexyl-m-phenylendiamin-1,3. Geeignete 3,3',5,5'-tetra-n-alkylsubstituierte 4,4'-Di-aminodiphenylmethane sind beispielsweise 3,3',5,5'-Tetra-methyl-, -Tetraethyl- und -Tetra-n-propyl-4,4'-diamino-diphenylmethan.

Vorzugsweise verwendet werden Diamino-diphenylmethane der Formel

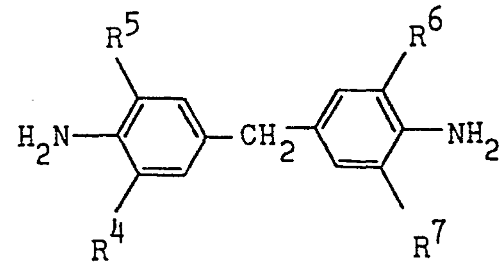

in der $R^4$, $R^5$, $R^6$ und $R^7$ gleich oder verschieden sind und einen Methyl-, Ethyl-, Propyl-, Isopropyl-, sek.-Butylund tert.-Butylrest bedeuten, wobei jedoch mindestens einer der Reste ein Isopropyl- oder sek. Butylrest sein muß. Die 4,4'-Diamino-diphenylmethane können auch im Gemisch mit Isomeren der Formeln

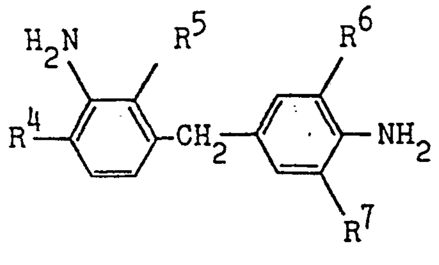

und/oder

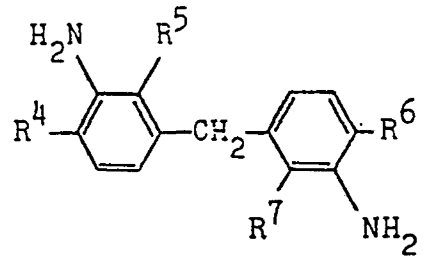

verwendet werden, wobei $R^4$, $R^5$, $R^6$ und $R^7$ die obengenannte Bedeutung haben.

Beispielhaft genannt seien: 3,3',5-Trimethyl-5'-iso-propyl-, 3,3',5-Triethyl-5'-isopropyl-, 3,3',5-Trimethyl-5'-sek-butyl-, 3,3',5-Triethyl-5'-sek-butyl-4,4'-di-amino-diphenylmethan, 3,3'-Dimethyl-5,5'-diisopropyl-, 3,3'-Dipropyl-5,5'-diisopropyl-, 3,3'-Diethyl-5,5'-diiso-propyl-, 3,3'-Dimethyl-5,5'-di-sek-butyl-, 3,3'-Diethyl-5,5'-di-sek-butyl-, 3,5-Dimethyl-3',5'-diisopropyl-, 3,5-Diethyl-3',5'-diisopropyl-, 3,5'-Dimethyl-3',5-di-sek-butyl-, 3,5-Diethyl-3',5'-di-sek-butyl-4,4'-diamino-di-phenylmethan, 3-Methyl-3',5,5'-triisopropyl-, 3-Ethyl-3',5,5'-triisopropyl-, 3-Methyl-3',5,5'-tri-sek-butyl-, 3-Ethyl-3',5,5'-tri-sek-butyl-4,4'-diaminc-diphenylmethan, 3,3'-Diisopropyl-5,5'-di-sek-butyl-, 3,5-Diisopropyl-3',5'-di-sek.-butyl-, 3-Ethyl-5-sek-butyl-3',5'-diisopropyl-, 3-Methyl-5-tert.-butyl-3',5'-diisopropyl-, 3-Ethyl-5-sek.-butyl-3'-methyl-5'-tert.-butyl-, 3,3',5,5'-Tetraiso-propyl- und 3,3',5,5'-Tetra-sek-butyl-4,4'-diaminodi-phenylmethan. Vorzugsweise verwendet werden 3,5-Dimethyl-3, 5,-diisopropyl- und 3,3',5,5'-Tetraisopropyl-4,4-di-amino-diphenylmethan. Die Diamino-diphenylmethane können einzeln oder in Form von Mischungen eingesetzt werden.

Die genannten Kettenverlängerungs- und/oder Vernetzungsmittel können einzeln oder als Mischungen von gleichen oder verschiedenen Arten verwendet werden.

Die Kettenverlängerungsmittel und/oder Vernetzungsmittel oder deren Mischungen kommen beim erfindungsgemäßen Verfahren in Mengen von 2 bis 60 Gew.-%, vorzugsweise 8 bis 50 Gew.-% und insbesondere 10 bis 40 Gew.-%, bezogen auf das Gewicht der Polyoxyalkylen-Polyoxyethylen-polyole und Kettenverlängerungsmittel und/oder Vernetzungsmittel zum Einsatz.

Als Katalysatoren werden insbesondere Verbindungen verwendet, die die Reaktion der Polyoxyalkylen-Polyoxyethylen-polyole und gegebenenfalls hydroxylgruppenhaltigen Kettenverlängerungsmittel mit den Polyisocyanaten stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinn-dilaurat, Dibutylzinn-maleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, Pentamethyl-diethylentriamin, Tetramethyldiaminoethylether, Bis-(dimethylaminopropyl)-harnstoff, Dimethylpiperazin, 1,2,Dimethylimidazol, 1-Azo-bicyclo-(3,3,0)-octan und vorzugsweise 1,4-Diaza-bicyclo-(2,2,2)-octan und Alkanolverbindungen, wie Triethanolamin, Triisopropanolamin, N-Methyl- und N-Ethyl-diethanolamin und Dimethylethanolamin.

Als Katalysatoren kommen ferner in Betracht: Tris-(dialkylaminoalkyl)-s-hexahydrotriazine, insbesondere Tris-N,N-dimethylaminopropyl)-s-hexahydrotriazin, Tetraalkylammoniumhydroxide, wie Tetramethylammoniumhydroxid, Alkalihydrcxide, wie Natriumhydroxid und Alkalialkoholate, wie Natriummethylat und Kaliumisopropylat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.%, insbesondere 0,05 bis 2 Gew.% Katalysator bzw. Katalysatorkombination bezogen auf das Polyoxyalkylen-Polyoxyethylen-polyolgewicht.

Zu Treibmitteln, welche im erfindungsgemäßen Verfahren gegebenenfalls verwendet werden können, gehört Wasser, das mit Isocyanatgruppen unter Bildung von Kohlendioxid reagiert. Die Wassermengen, die zweckmäßigerweise verwendet werden können, betragen 0,05 bis 2 Gew.-%, bezogen auf das Gewicht an Polyoxyalkylen-Polyoxyethylen-polyol.

Andere verwendbare Treibmittel sind niedrig siedende Flüssigkeiten, die unter dem Einfluß der exothermen Polyadditionsreaktion verdampfen. Geeignet sind Flüssigkeiten, welche gegenüber dem organischen Polyisocyanat inert sind und Siedepunkte unter 100°C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluorethan und 1,1,2-Trichlor-1,2,2-trifluorethan.

Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung von zellhaltigen Polyurethan-Elastomeren hängt ab von der Dichte, die man erreichen will sowie gegebenenfalls von der Mitverwendung von Wasser. Im allgemeinen liefern Mengen von 0,5 bis 15 Gew.-Teilen, bezogen auf 100 Gew.-Teile Polyoxyalkylen-Polyoxyethylen-polyol zufriedenstellende Ergebnisse.

Der Reaktionsmischung können gegebenenfalls auch noch Hilfs- und Zusatzstoffe einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin oder stearinsaures Diethanolamin, Salze von Sulfonsäuren, z.B. Alkalioder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester und Türkischrotöl und Zellregler, wie Paraffine, Fettalkohole und Dimethylpolysiloxane. Die oberflächenaktiven Substanzen werden üblicherweise in Mengen von 0,01 bis 5 Gewichtsteilen, bezogen auf 100 Gewichtsteilen Polyoxyalkylen-Polyoxyethylen-polyol angewandt.

Als Füllstoffe, insbesondere verstärkend wirkende Füllstoffe sind die an sich bekannten üblichen organischen und anorganischen Füllstoffe, Verstärkungsmittel, Beschwerungsmittel, Mittel zur Verbesserung des Abriebverhaltens in Anstrichfarben, Beschichtungsmitteln usw. zu verstehen. Im einzelnen seien beispielhaft genannt: anorganische Füllstoffe wie silikatische Mineralien, beispielsweise Schichtsilikate, wie Antigorit, Serpentin, Hornblenden, Amphibole, Chrisotil, Talkum; Metalloxide, wie Kaolin, Aluminiumoxide,

Titanoxide und Eisenoxide, Metallsalze wie Kreide, Schwerspat und anorganische Pigmente, wie Cadmiumsulfid, Zinksulfid sowie Glas, Asbestmehl u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Asbest, Wollastonit und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und vorzugsweise Pfropfpolymerisate auf Styrol-Acrylnitrilbasis, die durch in situ Polymerisation von Acrylnitril-Styrol-Mischungen in Polyetherolen analog den Angaben der deutschen Patentschriften 11 11 394, 12 22 669, (US 3 304 273, 3 383 351, 3 523 093) 11 52 536 (GB 1 040 452) und 11 52 537 (GB 987 618) hergestellt werden sowie Fillerpolyole, bei denen wäßrige Polymerdispersionen in Polyoldispersionen übergeführt werden.

Die anorganischen und organischen Füllstoffe können einzeln oder als Gemische verwendet werden. Vorzugsweise Anwendung finden stabile Füllstoff-Polyol-Dispersionen, bei denen die Füllstoffe in Gegenwart von Polyolen in situ mit hohen örtlichen Energiedichten auf eine Teilchengröße kleiner als 7μm zerkleinert und hierbei gleichzeitig dispergiert werden. Füllstoff-Polyol-Dispersionen dieser Art werden beispielsweise in den deutschen Offenlegungsschriften 28 50 609, 28 50 610 und 29 32 304 beschrieben.

Die anorganischen und organischen Füllstoffe werden der Reaktionsmischung vorteilhafterweise in Mengen von 0,5 bis 50 Gew.%, vorzugsweise 1 bis 40 Gew.%, bezogen auf das Gewicht der Polyisocyanat-Polyoxyalkylen-polyoxyethylen-Mischung einverleibt.

Geeignete Flammschutzmittel sind beispielsweise Trikresylphosphat, Tris-2-chlorethylphosphat, Trischlorpropylphosphat und Tris-2,3-dibrompropylphosphat.

Außer den bereits genannten halogensubstituierten Phosphaten können auch anorganische Flammschutzmittel, wie Aluminiumoxidhydrat, Antimontrioxid, Arsenoxid, Ammoniumpolyphosphat und Calciumsulfat sowie Veresterungsprodukte niedermolekularer Polyole und halogenierter Phthalsäurederivaten zum Flammfestmachen der Formkörper verwendet werden. Im allgemeinen hat es sich als zweckmäßig erwiesen, 5 bis 50 Gewichtsteile, vorzugsweise 5 bis 25 Gewichtsteile der genannten Flammschutzmittel für jeweils 100 Gewichtsteile an Polyoxyalkylen-Polyoxyethylen-polyol zu verwenden.

Nähere Angaben über die obengenannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, zu entnehmen.

Zur Herstellung der gegebenenfalls zellhaltigen Polyurethan-Elastomeren werden die organischen Polyisocyanate, Polyoxyalkylen-Polyoxyethylen-polyole und Kettenverlängerungsmittel und/oder Vernetzungsmittel in solchen Mengen zur Umsetzung gebracht, daß das Verhältnis von NCO-Gruppen zu zerewitinoffaktiven Wasserstoffatomen, gebunden an OH-, $-NH_2$ und -NHR-Gruppen 1:0,90 bis 1,25, vorzugsweise 1:0,95 bis 1,15 beträgt.

Die Herstellung der zellhaltigen und kompakten Polyurethan-Elastomeren erfolgt vorzugsweise im one shot-Verfahren nach der bekannten Reaktionsspritzguß-Technik. Diese Verfahrensweise wird beispielsweise beschrieben von Piechota und Röhr in "Integralschaumstoff", Carl-Hanser-Verlag, München, Wien 1975; D.J. Prepelka und J.L. Wharton in Journal of Cellular Plastics, März/ April 1975, Seiten 87 bis 98 und U. Knipp in Journal of Cellular Plastics, März/April 1973, Seiten 76 bis 84. Die Formulierungen lassen sich jedoch auch zu Gießelastomeren und Integralschaumstoffen auf konventionelle Art verarbeiten.

Bei Verwendung einer Mischkammer mit mehreren Zulaufdüsen können die Ausgangskomponenten einzeln zugeführt und in der Mischkammer intensiv vermischt werden. Als besonders vorteilhaft hat es sich erwiesen nach dem Zweikomponenten-Verfahren zu arbeiten und die Kettenverlängerungsmittel in den Polyolen zu lösen und mit den Katalysatoren und gegebenenfalls Treibmitteln, Hilfs- und Zusatzstoffen in der Komponente A zu vereinigen und als Komponente B die organischen Polyisocyanate zu verwenden. Vorteilhaft ist hierbei beispielsweise, daß die Komponenten A und B getrennt gelagert und raumsparend transportiert werden können und bei der Verarbeitung nur noch in den entsprechenden Mengen gemischt werden müssen.

Die Menge des in die Form eingebrachten Reaktionsgemisches wird so bemessen, daß die erhaltenen kompakten Formkörper eine Dichte von 0,8 bis 1,4 $g/cm^3$, vorzugsweise von 0,9 bis 1,35 $g/cm^3$ und die zellhaltigen Formkörper eine Dichte von 0,1 bis 0,8 $g/cm^3$, vorzugsweise von 0,15 bis 0,6 $g/cm^3$ aufweisen. Die Ausgangskomponenten werden mit einer Temperatur von 15 bis 70°C, vorzugsweise von 20 bis 60°C in die Form eingebracht. Die Formtemperatur beträgt zweckmäßigerweise 20 bis 90°C, vorzugsweise 30 bis 65°C, gegebenenfalls kann es vorteilhaft sein, übliche Formtrennmittel, beispielsweise auf Wachs- oder Silikonbasis, zur Verbesserung der Entformung, einzusetzen. Die Verdichtungsgrade zur Herstellung der zellhaltigen Formkörper liegen zwischen 1,1 und 8.

Die nach dem erfindungsgemäßen Verfahren erhältlichen kompakten bzw. zellhaltigen Polyurethan-Elastomeren eignen sich insbesondere zur Verwendung in der Automobilindustrie, beispielsweise als Stoßstangenabdeckungen und Karosserieteile wie Kotflügel, Spoiler und Radkästenverbreiterungen sowie technische Gehäuseteile und Laufrollen, die zellhaltigen Schaumstoffe finden beispielsweise als Schuhsohlen, Armlehnen, Kopfstützen, Sicherheitsabdeckungen im Automobilinnenraum sowie als Motorradund Fahrradsättel und Sitzkissen, Deckschichten in Verbundschaumstoffen Anwendung.

Die in den Beispielen genannten Teile beziehen sich auf das Gewicht.

**Herstellung der erfindungsgemäß verwendbaren Polyoxyalkylen-polyoxyethylen-polyole A-E und Vergleichssubstanzen I bis III.**

**Allgemeine Herstellungsvorschrift**

Die hydroxylgruppenhaltigen Polyoxyalkylen-polyoxyethylenpolyole werden nach einem 4 Stufenverfahren hergestellt, wobei sich die Oxalkylierung jedoch je nach den technischen Gegebenheiten gegebenenfalls in noch mehr Reaktionsstufen unterteilen läßt. Bei der beschriebenen Verfahrensvariante wird das Propylenoxid mit zu Beginn der Reaktion ungefähr 0,06 Mol Kaliumhydroxid pro Äquivalent reaktivem Wasserstoffatom des Startermoleküls polymerisiert (ausgenommen bei Polyol B und Vergleichssubstanz III). Nach einem Umsatz von 100 % wird die Katalysatorkonzentration in einem Schritt mit unterschiedlichen Katalysatormengen erhöht und mit Ethylenoxid nachpolymerisiert.

**1. Stufe:**

Das Startermolekül wird im Reaktor vorgelegt und mit einer 45 gewichtsprozentigen wäßrigen Kaliumhydroxidlösung gemischt. Zur Bildung des Alkoholats wird die Mischung unter vermindertem Druck und Abdestillieren von Wasser 1,5 Stunden auf 130° C erwärmt.

**2. Stufe:**

Das Propylenoxid wird bei einer Temperatur von 105° C in einer solchen Menge zugeführt, daß ein Druck von maximal 7 bar nicht überschritten wird. Nach Beendigung der Propylenoxidzugabe und einer Nachreaktion von 4 bis 5 Stunden wird die Reaktionsmischung zur Abtrennung des Restmonomeren gestrippt.

**3. Stufe:**

Die Reaktionsmischung wird mit zusätzlichem Katalysator gemischt und zur Abtrennung des bei der Alkoholatbildung entstehenden Reaktionswassers solange unter vermindertem Druck auf 120° C erwärmt bis kein Wasser mehr abdestilliert.

**4. Stufe:**

Das Ethylenoxid wird analog der 2. Stufe bei 105° C und einem maximalen Druck von 5 bar zudosiert. Nach Abreaktion des Ethylenoxids wird die Reaktionsmischung zur Entfernung der Restmonomeren unter vermindertem Druck gestrippt und nach bekannten Methoden aufgearbeitet.

Die verwendeten Ausgangskomponenten und deren Mengen sowie die Kenndaten der erhaltenen Polyoxyalkylen-polyoxyethylen-polyole sind in Tabelle 1 zusammengefaßt.

Der chemische Aufbau der Produkte, der Ethoxilierungsgrad, die OH-Zahl und der Gehalt an primären Hydroxylgruppen sind in Tabelle 2 zusammengefaßt. Die in Klammern genannten Prozentzahlen beziehen sich auf das Gewicht der Alkylenoxidmischung.

Tabelle I

| Polyoxyalkylen-polyoxyethylen-polyole<br>Ausgangskomponenten / Vergleichssubstanzen<br>Reaktionsbedingungen | | I | A | C | II | D | E | III | B |
|---|---|---|---|---|---|---|---|---|---|
| 1. Stufe: Starter: Glycerin | [g] | — | — | — | 92,09 | 92,09 | 92,09 | — | — |
| Propylenglykol | [g] | 76,09 | 76,09 | 76,09 | — | — | — | 76,09 | 76,09 |
| 45 gew.%rige wäßige KOH | [g] | 19,6 | 19,6 | 19,6 | 33,5 | 30,0 | 33,3 | 9,5 | 9,5 |
| KOH/reaktive H-Atome | [Mol] | — | — | — | — | — | — | 0,038 | 0,038 |
| 2. Stufe: Propylenoxid | [g] | 3560 | 3620 | 4221 | 6030 | 5360 | 6530 | 1690 | 1690 |
| max. Druck | [bar] | 6,2 | 6,0 | 6,5 | 6,5 | 6,0 | 6,7 | 5,5 | 5,4 |
| Hydroxylzahl | | 36,5 | 36,1 | 31,5 | 34 | 39,4 | 30 | 64 | 63 |
| 3. Stufe: 45 gew.%rige wäßige KOH | [g] | — | 50 | 50 | — | 74,8 | 74,8 | — | 63,3 |
| KOH/reaktive H-Atome | [Mol] | — | — | — | — | — | — | — | 0,25 |
| 4. Stufe: Ethylenoxid | [g] | 790 | 900 | 575 | 1500 | 1340 | 890 | 371 | 370 |
| Ethoxilierungsgrad[x] | | 8,0 | 8,93 | 5,56 | 9,66 | 8,50 | 5,8 | 4,25 | 4,25 |
| max. Druck | [bar] | 4,0 | 4,5 | 4,0 | 4,5 | 4,0 | 3,5 | 3,8 | 4,0 |
| Polyoxyalkylenpolyoxyethylen-polyol: | | | | | | | | | |
| Hydroxylzahl | | 29 | 28 | 27 | 26 | 30 | 26 | 52,5 | 52 |
| primäre Hydroxylgruppen | [%] | 84 | >95 | 90 | 83 | 94 | 93 | 65 | 87 |
| ungesättige Anteile | [Gew.%] | 0,065 | 0,063 | 0,07 | 0,07 | 0,09 | 0,064 | 0,02 | 0,02 |
| Säurezahl | | <0,01 | <0,01 | <0,01 | <0,01 | <0,01 | <0,01 | <0,01 | <0,01 |
| Wassergehalt | [Gew.%] | 0,03 | 0,01 | 0,02 | 0,02 | 0,04 | 0,04 | 0,03 | 0,02 |

[x]unter Berücksichtigung der ungesättigten Antelle

Tabelle 2

Chemischer Aufbau der erfindungsgemäß verwendbaren Polyoxyalkylen-polyoxyethylen-polyole

| Polyoxyalkylen-Polyoxethylen-Polyol | Chemischer Aufbau | | Ethoxilierungsgrad[x] | OH-Zahl [mg KOH/g] | primäre OH-Gruppen [%] |
|---|---|---|---|---|---|
| A | Dipropylenglykol-Propylenoxid-<br>Ethylenoxid | (80 %)<br>(20 %) | 8,93 | 28 | 95 |
| B | Dipropylenglykol-Propylenoxid-<br>Ethylenoxid | (82 %)<br>(18 %) | 4,25 | 52 | 87 |
| C | Dipropylenglykol-Propylenoxid-<br>Ethylenoxid | (88 %)<br>(12 %) | 5,56 | 27 | 90 |
| D | Glycerin-Propylenoxid-<br>Ethylenoxid | (80 %)<br>(20 %) | 8,5 | 30 | 94 |
| E | Glycerin-Propylenoxid-<br>Ethylenoxid | (88 %)<br>(12 %) | 5,8 | 26 | 93 |
| Vergleichssubstanzen: | | | | | |
| Polyol I | Propylenglykol-Propylenoxid-<br>Ethylenoxid | (81,8 %)<br>(18,2 %) | 8 | 29 | 84 |
| Polyol II | Glycerin-Propylenoxid-<br>Ethylenoxid | (88 %)<br>(12 %) | 9,66 | 26 | 83 |
| Polyol III | Propylenglykol-Propylenoxid-<br>Ethylenoxid | (82 %)<br>(18 %) | 4,25 | 52,5 | 65 |

[x)] unter Berücksichtigung der ungesättigten Anteile

**Herstellung von zellhaltigen Polyurethan-Elastomeren**

**Vergleichsbeispiel**

Eine Mischung (Polyolkomponente) aus

| | | |
|---|---|---|
| 68,1 | Teilen | Polyol I, |
| 16,8 | Teilen | Polyol II, |
| 0,5 | Teilen | Ethylenglykol, |
| 7,3 | Teilen | Butandiol-1,4, |
| 1,6 | Teilen | einer 25 %igen Lösung von Diazabicyclooctan in Butandiol-1,4, |
| 0,1 | Teilen | einer 50 %igen Lösung von Wasser in sulfoniertem Ricinusöl, |
| 0,016 | Teilen | Dibutylzinndilaurat, |
| 0,1 | Teilen | eines Silikonöls (DC 193 der Firma DOW Corning) und |
| 5,5 | Teilen | Dichlordifluormethan |

werden mit
47 Teilen eines Umsetzungsproduktes aus 4,4'-Diphenyl-methan-diisocyanat und Dipropylenglykol mit einem Isocyanatgehalt von 23 % (Isocyanatkomponente A)
mit Hilfe einer Niederdruck-Dosiermaschine vom Typ EMB F 20 St (Hersteller: Elastogran-Maschinenbau) vermischt.

240 g der erhaltenen Mischung werden in eine auf 50°C temperierte Metallform mit den Abmessungen 200 X 200 x 10 mm eingetragen.

Zur Bestimmung der minimalen Entformzeit wird eine Probeplatte nach 2,5 Minuten der Metallform entnommen und der sogenannte Knicktest durchgeführt. Hierzu wird bei Probeplatte in Abständen von 15 Sekunden an jeweils anderer Stelle schnell um 180° umgebogen und so der Zeitpunkt bestimmt, zu dem an der Biegestelle keinerlei Haarrisse mehr auftreten. Dieser Zeitpunkt wird t-rißfrei genannt.

Die anderen hergestellten Platten werden nach der Zeit t-rißfrei entformt und die mechanischen Eigenschaften entsprechend RAL RG-702/1 bestimmt.

**Beispiele 1 bis 4**

Man verfährt analog den Angaben des Vergleichsbeispiels verwendet jedoch anstelle der Polyole I und II die erfindungsgemäß verwendbaren Polyoxyalkylen-Polyoxyethylen-polyole A-E. Die übrigen Einsatzstoffe für die Polyolkomponenten werden in den Mengen des Vergleichsbeispiels eingesetzt.

Die Art und Mengen der eingesetzten Polyole und die Menge der Isocyanatkomponente A sowie die an den erhaltenen Platten gemessenen mechanischen Eigenschaften sind in Tabelle 3 zusammengefaßt.

Es zeigt sich, daß mit den erfindungsgemäßen Polyolen erheblich kürzere Entformzeiten bei gleich guter Dimensionsstabilität (kein Schrumpf, kein Blähen) erreicht werden. Bei gleich guter Reißdehnung und Dauerbiegebeständigkeit wird zudem mit dem Polyol B eine deutlich verbesserte Reißfestigkeit erzielt, während mit den Polyolen A, C, D und E eine signifikante Härtezunahme erreicht wird.

**Tabelle 3**

Zusammensetzung und mechanische Eigenschaften von zellhaltigen Polyurethan-Elastomeren

| Ausgangsstoffe | | Vergleichsbeispiel | Beispiele 1 | 2 | 3 | 4 |
|---|---|---|---|---|---|---|
| Polyol I [Teile] | | 68,1 | — | — | — | — |
| Polyol II [Teile] | | 16,8 | 17,0 | — | — | — |
| Polyol A [Teile] | | — | — | — | 67,9 | — |
| Polyol B " | | — | 67,9 | 84,9 | — | — |
| Polyol C " | | — | — | — | — | 67,9 |
| Polyol D " | | — | — | — | 17,0 | — |
| Polyol E " | | — | — | — | — | 17,0 |
| Isocyanatkomponente A [Teile] | | 47 | 52 | 53 | 47 | 46 |
| Mechanische Eigenschaften der Prüfplatte | | | | | | |
| Rohdichte | [g/cm³] | 0,6 | 0,6 | 0,6 | 0,6 | 0,6 |
| t-rißfrei | [min] | 4,5 | 3,0 | 3,5 | 3,5 | 3,0 |
| Reißfestigkeit[x] | [N/mm²] | 5,0 | 6,6 | 6,2 | 5,5 | 5,1 |
| Reißdehnung[x] | [%] | 450 | 450 | 440 | 450 | 430 |
| Dauerbiegebestimmung[x] 30 000 H mit 2 mm Einstich | | | keine Sticherweiterung | | | |
| Härte | [Shore A] | 64 | 63 | 64 | 68 | 69 |

[x] bestimmt nach RAL RG-702/1

## Patentansprüche

1. Verfahren zur Herstellung von gegebenenfalls zellhaltigen Polyurethan-Elastomeren durch Umsetzung von organischen Polyisocyanaten, Blockpolyether-polyolen, Kettenverlängerungsmitteln und/oder Vernetzungsmitteln in Gegenwart von Katalysatoren sowie gegebenenfalls Treibmitteln, Hilfs- und Zusatzstoffen, dadurch gekennzeichnet, daß man als Blockpolyether-polyole Polyoxyalkylen-Polyoxyethylen-polyole mit endständigen Oxyethylengruppen verwendet, die einen Ethoxilierungsgrad von 1 bis 13 und einen Gehalt an primären Hydroxylgruppen beim entsprechenden Ethoxilierungsgrad vom Werte der Kurve A bis 100 %, bezogen auf die Gesamtmenge an Hydroxylgruppen, besitzen, wobei die Kurve A die Abhängigkeit des Gehalts an primären Hydroxylgruppen vom Ethoxilierungsgrad wie folgt beschreibt:

| Ethoxilierungs-grad | Gehalt an premiären hydroxylgruppen (bezogen auf die Gesamtmenge an Hydroxylgruppen) (%) |
|---|---|
| 1 | 46,8 - 100 |
| 1,5 | 54,3 - 100 |
| 2 | 59,7 - 100 |
| 2,5 | 63,9 - 100 |
| 3 | 67,3 - 100 |
| 3,5 | 70,2 - 100 |
| 4 | 72,7 - 100 |
| 4,5 | 74,9 - 100 |
| 5 | 76,8 - 100 |
| 5,5 | 78,8 - 100 |
| 6 | 80,2 - 100 |
| 7 | 83,1 - 100 |
| 8 | 85,6 - 100 |
| 9 | 87,8 - 100 |
| 10 | 89,8 - 100 |
| 11 | 91,0 - 100 |
| 12 | 92,0 - 100 |
| 13 | 93,0 - 100 |

2. Verfahren nach Anspruch 1, dadurch gekennzeichnet, daß die Polyoxyalkylen-Polyoxyethylen-polyole Funktionalitäten von 2 bis 8 und Hydroxylzahlen von 10 bis 500 besitzen.

3. Verfahren nach Anspruch 1, dadurch gekennzeichnet, daß die Polyoxyalkylen-polyoxyethylen-polyole Ethoxilierungsgrade von 2 bis 8 besitzen.

4. Verfahren nach Anspruch 1, dadurch gekennzeichnet, daß man zur Herstellung der gegebenenfalls zellhaltigen Polyurethan-Elastomeren die Reaktionsspritzgußtechnik einsetzt.

## Claims

1. A process for the preparation of cellular or non-cellular polyurethane elastomers by reacting organic polyisocyanates, block polyether polyols, chain extenders and/or crosslinking agents in the presence of catalysts and in the presence or absence of blowing agents, auxiliaries and additives, wherein the block polyether polyols used are polyoxyalkylene polyoxyethylene polyols with terminal hydroxyethylene groups, which have a degree of ethoxylation of 1 to 13 and contain, at the degree of ethoxylation concerned, primary hydroxyl groups in an amount indicated by curve A up to 100 percent, curve A showing the dependency of the content of primary hydroxyl groups upon the degree of ethoxylation as follows:

| Degree of ethoxylation | Content of primary hydroxyl group (based on the total amount of hydroxyl groups [%] |
|---|---|
| 1 | 46.8 - 100 |
| 1.5 | 54.3 - 100 |
| 2 | 59.7 - 100 |
| 2.5 | 63.9 - 100 |
| 3 | 67.3 - 100 |
| 3.5 | 70.2 - 100 |
| 4 | 72.7 - 100 |
| 4.5 | 74.9 - 100 |
| 5 | 76.8 - 100 |
| 5.5 | 78.8 - 100 |
| 6 | 80.2 - 100 |
| 7 | 83.1 - 100 |
| 8 | 85.6 - 100 |
| 9 | 87.8 - 100 |
| 10 | 89.8 - 100 |
| 11 | 91.0 - 100 |
| 12 | 92.0 - 100 |
| 13 | 93.0 - 100 |

2. A process as claimed in claim 1, wherein the polyoxyalkylene polyoxyethylene polyols have functionalities of 2 to 8 and hydroxyl numbers of 10 to 500.

3. A process as claimed in claim 1, wherein the polyoxyalkylene polyoxyethylene polyols have degrees of ethoxylation of 2 to 8.

4. A process as claimed in claim 1, wherein a reaction molding technique is used to prepare the cellular or noncellular polyurethane elastomers.

**Revendications**

1. Procédé de préparation de polyuréthannes élastomères éventuellement cellulaires par réaction de polyisocyanates organiques, de polyéther-polyols à blocs, d'agents d'allongement des chaînes et (ou) d'agents de réticulation en présence de catalyseurs et éventuellement d'agents porogènes, d'additifs et d'adjuvants, caractérisé en ce que l'on emploie comme polyéther-polyols à blocs des polyoxyalkylène-polyoxyéthylène-polyols à groupes oxyéthylène terminaux, possédant un degré d'éthoxylation compris entre 1 et 13 et une teneur en groupes hydroxyle primaires comprise entre la valeur donnée par la courbe A pour le degré d'éthoxylation correspondant et 100 % de la teneur totale en groupes hydroxyle, la courbe A indiquant la dépendance de la teneur en groupes hydroxyle primaires du degré d'éthoxylation de la façon suivante:

| Degré d'éthoxylation | Teneur en groupes hydroxyle primaires (% de la teneur totale en groupes hydroxyle) |
|---|---|
| 1 | 46,8 - 100 |
| 1,5 | 54,3 - 100 |
| 2 | 59,7 - 100 |
| 2,5 | 63,9 - 100 |
| 3 | 67,3 - 100 |
| 3,5 | 70,2 - 100 |
| 4 | 72,7 - 100 |
| 4,5 | 74,9 - 100 |
| 5 | 76,8 - 100 |
| 5,5 | 78,8 - 100 |
| 6 | 80,2 - 100 |
| 7 | 83,1 - 100 |
| 8 | 85,6 - 100 |
| 9 | 87,8 - 100 |
| 10 | 89,8 - 100 |
| 11 | 91,0 - 100 |
| 12 | 92,0 - 100 |
| 13 | 93,0 - 100 . |

2. Procédé suivant la revendication 1, caractérisé en ce que les polyoxyalkylène-polyoxyéthylène-polyols possèdent une fonctionnalité comprise entre 2 et 8 et un indice d'hydroxyle compris entre 10 et 500.

3. Procédé suivant la revendication 1, caractérisé en ce que les polyoxyalkylène-polyoxyéthylène-polyols possèdent des degrés d'éthoxylation compris entre 2 et 8.

4. Procédé suivant la revendication 1, caractérisé en ce que les polyuréthannes élastomères éventuellement cellulaires sont préparés par la technique du moulage par injection des mélanges réactionnels.

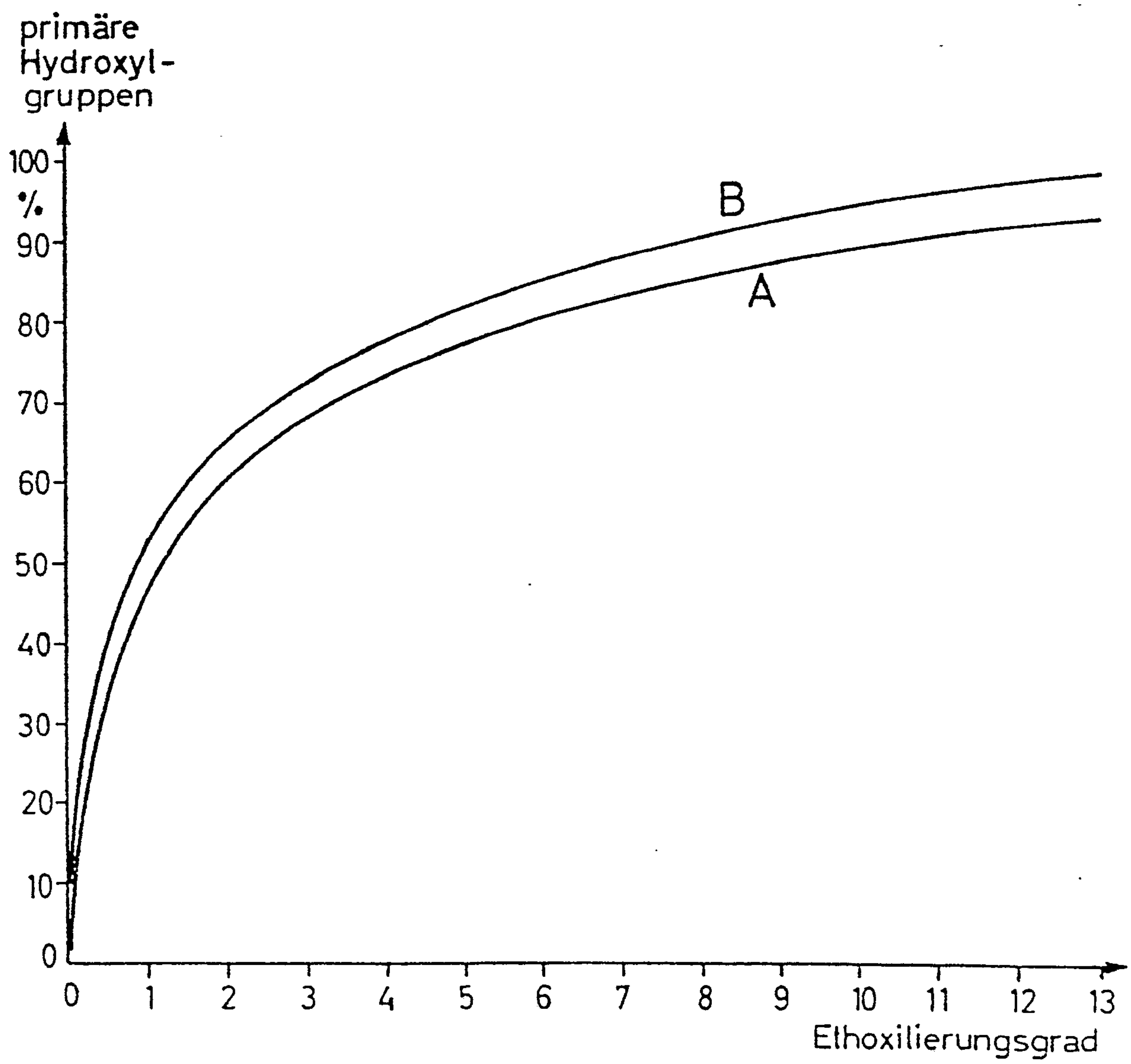

primäre Hydroxyl-gruppen
%
100
90
80
70
60
50
40
30
20
10
0
B
A
0
1
2
3
4
5
6
7
8
9
10
11
12
13
Ethoxilierungsgrad